**Europäisches Patentamt**

**European Patent Office**

**Office européen des brevets**

(19)

(11) Veröffentlichungsnummer: **0 027 943**
B1

(12) # EUROPÄISCHE PATENTSCHRIFT

(45) Veröffentlichungstag der Patentschrift:
**23.06.82**

(21) Anmeldenummer: **80106202.7**

(22) Anmeldetag: **11.10.80**

(51) Int. Cl.³: **C 07 C 118/00**, C 08 G 18/76

(54) Verfahren zur Aufarbeitung von vernetzten, harnstoffgruppenhaltigen Isocyanatdestillationsrückständen und Verwendung der Verfahrensprodukte als Ausgangskomponenten bei der Herstellung von Kunststoffen.

(30) Priorität: **23.10.79 DE 2942678**

(43) Veröffentlichungstag der Anmeldung:
**06.05.81 Patentblatt 81/18**

(45) Bekanntmachung des Hinweises auf die Patenterteilung:
**23.06.82 Patentblatt 82/25**

(84) Benannte Vertragsstaaten:
**BE DE FR GB IT NL**

(56) Entgegenhaltungen:
**DE-A-2 035 731**
**US-A-3 128 310**

(73) Patentinhaber: **BAYER AG, Zentralbereich Patente, Marken und Lizenzen, D-5090 Leverkusen 1, Bayerwerk (DE)**

(72) Erfinder: **Reischl, Artur, Dr., H.T.-von-Böttinger-Strasse 19, D-5090 Leverkusen (DE)**

Verfahren zur Aufarbeitung von vernetzten, harnstoffgruppenhaltigen Isocyanatdestillationsrückständen und Verwendung der Verfahrensprodukte als Ausgangskomponenten bei der Herstellung von Kunststoffen

Die vorliegende Erfindung betrifft die Herstellung von löslichen, Hydroxyalkyl- und Urethangruppen enthaltenden Verbindungen durch Alkoholyse aus hochvernetzten, unlöslichen, mit Wasser weitgehend oder vollständig abreagierten Destillationsrückständen aus der technischen Produktion von Toluylendiisocyanat. Die dabei als Lösungen, Schmelzen oder Pulver anfallenden Produkte können als Rohstoffe für die Herstellung von Kunststoffen oder Kunststoffzwischenprodukten mit verminderter Brennbarkeit verwendet oder durch einfache Hydrolyse in die der Herstellung von Toluylendiisocyanat (»TDI«) zugrunde liegenden Toluylendiamine (»TDA«) recyclisiert werden.

Unter den technisch realisierbaren Bedingungen fallen bei der Destillation des Phosgenierungsproduktes von Toluylendiaminen immer höhermolekulare, unlösliche Folgeprodukte mit Uretdion-, Isocyanurat-, Carbodiimid-, Uretonimin-, Harnstoff- und Biuretgruppen an. Je nach Reinheit der Ausgangsamine entstehen bei der Phosgenierung außerdem Methylbenzimidazolone, die im Laufe der Zeit mit den vorhandenen freien Isocyanatgruppen unter Molekülvergrößerung zu unlöslichen, vernetzten Produkten biuretisiert werden.

Ein partielles Recycling dieser großtechnisch in riesigen Mengen unvermeidlich anfallenden TDI-Destillationsrückstände gelang in letzter Zeit durch alkalische Hydrolyse. Es wird dabei allerdings nur ein relativ kleiner Anteil an Toluylendiaminen während einer außerordentlich langsam ablaufenden Hydrolyse rückgewonnen, der nur mit großem Aufwand in reiner Form isoliert werden kann (siehe US-PS 3 128 310 und 3 331 876).

Mehr Erfolg, die Ausbeute an 2,4-TDI (»T 100«) bzw. an Isomerengemischen aus 80% 2,4-TDI und 20% 2,6-TDI (»T 80«) oder 65% 2,4-TDI und 35% 2,6-TDI (»T 65«), jeweils bezogen auf eingesetztes Toluylendiamin, zu maximieren, brachten die sogenannten Fallrohrverdampfer (DE-OS 2 035 731). Dabei fallen verringerte Mengen einer fast monomerenfreien, jedoch noch bis 25 Gew.-Proz. freie Isocyanatgruppen enthaltenden Sumpfphase an, die zwecks Vermeidung von leicht auftretenden Schwelbränden und auch aus physiologischen Gründen unmittelbar im Anschluß an die Abtrennung des reinen, monomeren TDI als teerartige Masse ca. 150 bis 300°C heiß mit Wasser abgeschreckt wird. Bei diesem Denaturierungsprozeß reagieren die noch vorhandenen freien Isocyanatgruppen zu einem erheblichen Teil mit dem Wasser unter starker Kohlendioxidentwicklung und Ausbildung von zusätzlichen Harnstoff- und Biuretgruppierungen, so daß nur noch ein geringer Rest (meist ca. 1 bis 10 Gew.-%) an inkludierten, freien Isocyanatgruppen übrig bleibt. (Im folgenden werden diese mit Wasser behandelten, vernetzten, im wesentlichen monomerenfreien Produkte als »denaturierte« TDI-Destillationsrückstände bezeichnet.) Beim Lagern in Wasser oder in feuchtem Zustand nimmt der Isocyanatgehalt im Verlauf längerer Zeiträume allmählich weiter ab.

Die so erhaltenen, schlackenartigen, Polyharnstoff-, Biuret-, Uretdion-, Carbodiimid- und Isocyanuratgruppen aufweisenden denaturierten TDI-Rückstände sind, im Gegensatz zu der vor der Wasserdenaturierung noch reichlich NCO-haltigen, niedermolekularen, aber nicht lagerbeständigen Sumpfphase der Destillation, in allen gebräuchlichen Lösungsmitteln völlig unlöslich. Oberhalb von 250 ± 30°C beginnen sie teilweise zu schmelzen, wobei Zersetzung unter Gasentwicklung auftritt. Eine technisch und ökonomisch interessante Verwertungsmöglichkeit für diese Rückstandsschlacken, insbesondere die extrem hochmolekularen und hochtemperaturbeständigen, unschmelzbaren T 80-Rückstandsschlacken, wie sie in der weitaus überwiegenden Menge bei der TDI-Produktion anfallen, wurde nach dem Stand der Technik bisher noch nicht gefunden.

Es war deshalb Aufgabe der vorliegenden Erfindung, aus den mit Hilfe von Wasser umweltfreundlich denaturierten TDI-Rückstandsschlacken Umwandlungsprodukte herzustellen, die eine technische Verwertung (auch in homogener flüssiger Form) als Rohstoff für die Herstellung von Kunststoffen mit verbesserten Eigenschaften ermöglichen.

Überraschenderweise wurde nunmehr gefunden, daß man flüssige und lösliche Umwandlungsprodukte erhält, wenn völlig unlösliche, mit Wasser denaturierte, hochvernetzte, schlackenartige, zerkleinerte Toluylendiisocyanat-Destillationsrückstände mit niedermolekularen, Hydroxylgruppen enthaltenden Verbindungen bei höheren Temperaturen umgesetzt werden.

Die erfindungsgemäß erhaltenen nieder- und höhermolekularen, H-acide Gruppen aufweisenden Folgeprodukte können sogar ohne jeden Reinigungsprozeß zu einem beliebigen Zeitpunkt, gegebenenfalls über weitere Zwischenstufen, zur Herstellung hochwertiger Kunststoffe mit verringerter Brennbarkeit verwendet oder in speziellen Fällen in einfacher Weise in die ursprünglich eingesetzten Diamine rückcyclisiert werden.

Gegenstand der Erfindung ist somit ein Verfahren zur Aufarbeitung von im wesentlichen monomerenfreien, vernetzten, in inerten organischen Lösungsmitteln unlöslichen, nicht unzersetzt schmelzbaren Destillationsrückständen, wie sie bei der destillativen Entfernung von monomeren Toluylendiisocyanaten aus dem rohen Phosgenierungsprodukt von Toluylendiaminen nach Denaturierung der Sumpfphase mit Wasser in Schlackenform anfallen, welches dadurch gekennzeichnet ist, daß man die Rückstandsschlacke, welche vorzugsweise eine Teilchengröße von weniger als 3 mm, insbesondere weniger als 1 mm, besonders bevorzugt weniger als 0,2 mm, aufweist, mit einem zweiwertigen und/oder dreiwertigen sowie gegebenenfalls einwertigen Alkohol vom Molekulargewicht 62–600, vorzugsweise 62–200, wobei eine solche Menge an Alkohol eingesetzt wird, daß mindestens 2 Gew.-%, bevorzugt mindestens 8 Gew.-%, besonders bevorzugt mindestens 15 Gew.-%, an alkoholischen Hydroxylgruppen, bezogen auf Gemisch aus Rückstandsschlacke und Alkohol, vorliegen, bei einer Temperatur von 130°C bis 300°C, bevorzugt 140–220°C, besonders bevorzugt 150–210°C, umsetzt, bis das Reaktionsgemisch homogen wird, danach die Reaktion durch Kühlen abbricht und gegebenenfalls anschließend nicht umgesetzten, überschüssigen Alkohol, z. B. durch Destillation unter vermindertem Druck bei Temperaturen unter 130°C oder durch Waschen mit Wasser, entfernt.

Die beim Denaturierprozeß in Wasser suspendierte TDI-Rückstandsschlacke, die im allgemeinen sehr grobkörnig anfällt, wird zweckmäßigerweise zunächst naß oder vorgetrocknet mit Zerkleinerungsmaschinen, beispielsweise einem Schneidgranulator oder einer Hammermühle, auf weniger als 3 mm, bevorzugt unter 1 mm Teilchengröße, vorzerkleinert und anschließend zu einem beliebigen Zeitpunkt nach bekannten Mahlverfahren entweder in der Naß- oder Trockenphase auf eine für die vorgesehene Umsetzung mit Alkoholgruppen enthaltenden Verbindungen erforderliche Endfeinheit gebracht. Dabei ist, wie weiter unten näher erläutert, zu beachten, daß die erfindungsgemäße Umwandlung der über Hauptvalenzbindungen hochvernetzten TDI-Rückschlacken in brauchbare und reproduzierbare Folgeprodukte gleichzeitig sowohl von der Korngröße der Rückstandsschlacken, der Art und Menge der erforderlichen alkoholischen Verbindungen als auch von der Reaktionstemperatur, Reaktionszeit und Mischintensität beeinflußt wird.

Als alkoholische Hydroxylgruppen enthaltende Verbindungen sind bevorzugt Glykole geeignet, deren mittleres Molekulargewicht unter 600, insbesondere unter 200 liegt, beispielsweise Ethylen-, Diethylen-, Tri- und Tetraethylenglykol oder die homologen Propylenglykole, aber auch die Sumpfrückstände, die bei der technischen Produktion von Ethylen- bzw. Propylenglykol aus den entsprechenden Alkylenoxiden verbleiben und die bisher meistens in Heizkraftwerken verbrannt werden. Ferner eignen sich z. B. Butan-, Buten- und Hexandiol oder — wenn auch vorzugsweise nur im Gemisch mit Glykolen — niedermolekulare dreiwertige Alkohole, insbesondere Glycerin. Einwertige Alkohole, bevorzugt mit einem Siedepunkt über 150°C, können in speziellen Fällen, insbesondere bei Verwendung dreiwertiger Alkohole, ebenfalls mitverwendet werden. Dies empfiehlt sich auch vor allem dann, wenn sie zusätzlich eine dispergierende Wirkung bei späterer Abmischung der Verfahrensprodukte mit höhermolekularen, H-aciden Verbindungen besitzen. Weniger geeignet sind Glykole, die neben ihrer alkoholischen Funktion Ester-, Acetal-, Polyamid- oder Polyharnstoffgruppen aufweisen. Derartige Glykole leisten für die Linearisierungsreaktionen nur einen sehr geringen Beitrag und werden daher vorwiegend in Mischung mit anderen Glykolen eingesetzt. Für das erfindungsgemäße Verfahren am meisten bevorzugt sind Ethylen-, Diethylen-, 1,2-Propylen- und Dipropylenglykol sowie 1,4-Butandiol und die obengenannten Destillationsrückstände aus der Ethylen- und Propylenglykolproduktion oder deren Mischungen.

Die Reaktionen des erfindungsgemäßen Verfahrens gehen immer vom festen Zustand des zerkleinerten, hochvernetzten TDI-Rückstandes aus, welcher ohne die erfindungsgemäße Reaktion mit Alkoholgruppen enthaltenden Verbindungen auch unter extremen Bedingungen, beispielsweise Temperaturen über 200°C und über 100 bar Druck, wegen seiner fehlenden Thermoplastizität nicht homogen verpreßt werden kann. Vielmehr erhält man Preßlinge mit tablettenartiger Konsistenz, die zwischen den Fingern leicht zerrieben werden können. Bei der Zugabe von mindestens der gleichen Gewichtsmenge an flüssigen OH-Verbindungen zur pulverisierten Rückstandsschlacke erhält man zunächst eine gut durchmischbare Suspension, die bei den vorzugsweise angewandten Temperaturen von 150–210°C je nach Teilchengröße relativ schnell in eine Lösung übergeht. Auf eine Korngröße unter 0,2 mm zerkleinerte Schlacke löst sich z. B. in Ethylenglykol bei 150°C nach einer Reaktionszeit von ca. 30–60 Minuten, bei 210°C schon nach ca. 1 Minute. Im Falle der Verwendung von 70 (55; 50) Gew.-% Ethylenglykol, bezogen auf die Gesamtmischung einschließlich TDI-Rückstand, erhält man tief rotbraune, homogene Flüssigkeiten, die bei 25°C Viskositäten von 450 (21 000, 105 000) mPas aufweisen und überraschenderweise sogar mit Wasser in einer Menge bis zu 50 Gew.-%, bezogen auf glykolische Reaktionslösung, verdünnbar sind. Eine Verdünnung ist auch mit vielen gebräuchlichen Lösungsmitteln möglich, insbesondere, wenn Spuren Wasser mitverwendet werden, beispielsweise mit Methanol, Ethanol, Aceton und Tetrahydrofuran. Die mittels der erfindungsgemäßen Linearisierungsreaktion erhältlichen, Hydroxyalkyl- und Urethangruppen enthaltenden Verbindungen können reproduzierbar und im wesentlichen ohne Zersetzungsreaktionen unter Kohlendioxidentwicklung hergestellt werden, wenn die obengenannten Reaktionsparameter (u. a. Zeit, Temperatur) sorgfältig aufeinander abgestimmt werden, weshalb zweckmäßig die optimalen Bedingungen erst in Vorversuchen ermittelt werden. Die Einwirkung der die Linearisierungsreaktionen bewirkenden Alkohole sollte zeitlich möglichst begrenzt und die Reaktionstemperatur nicht höher gewählt werden als es für eine rasche Überführung der vernetzten Schlacke in lösliche Linearisierungsprodukte erforderlich ist (bevorzugt sind Reaktionszeiten von 1 bis 60 Minuten). Wie schon erwähnt, kann die Linearisierungsreaktion abgebrochen werden, wenn das Reaktionsgemisch homogen geworden ist, d. h., sobald die Reaktionsprodukte im überschüssigen Alkohol in Lösung gegangen sind. Weiteres Erhitzen kann dazu führen, daß die genannten Zersetzungsreaktionen unter $CO_2$-Abspaltung eintreten. Durch einen einfachen Vorversuch läßt sich für jeden gewünschten Alkohol die technisch optimale Reaktionstemperatur innerhalb der oben angegebenen Bereiche feststellen. Um eine schnell ablaufende Alkoholyse zu gewährleisten, verwendet man bevorzugt möglichst feinteilige TDI-Rückstandsschlacke, größere Überschußmengen an Alkoholen mit bevorzugt höherem OH-Gruppenanteil, d. h., niedrigem Molekulargewicht und sorgt gleichzeitig für eine sehr intensive Durchmischung.

So ist es überraschenderweise möglich, bei Verwendung von denaturierter TDI-Rückstandsschlacke mit einer mittleren Korngröße unter 300 µm, bevorzugt unter 100 µm und mindestens der gleichen Gewichtsmenge an niedermolekularen Glykolen, wie Ethylen- oder Diethylenglykol, bezogen auf das Trockengewicht der Rückstandsschlacke, gegebenenfalls unter Mitverwendung geringer Mengen Alkali, die Linearisierungsreaktionen diskontinuierlich in einfachen Kesselrührapparaturen durch allmähliches Erhitzen einer Suspension des TDI-Rückstandes im Glykol auf 100 – 120° C einzuleiten und durch rasches weiteres Erhitzen auf Temperaturen von ca. 150 – 180° C innerhalb von ca. 15 Minuten zu Ende zu führen, wobei im überschüssigen Glykol gelöste lagerstabile, Urethan- und Hydroxyalkylendgruppen enthaltende Folgeprodukte entstehen, die direkt als Kettenverlängerungsmittel bzw. Vernetzer bei der Herstellung von gegebenenfalls zelligen Polyurethankunststoffen oder Polyurethanbeschichtungen dienen können. Es ist aber beispielsweise auch möglich, in derselben Apparatur nach Zugabe von gesättigten oder ungesättigten Dicarbonsäuren unter Wasserabspaltung die Glykolyseprodukte anschließend weiter zu OH-funktionellen Polyestern mit eingebauten Polyurethan- und gegebenenfalls Polyharnstoffgruppen umzusetzen und diese als Zwischenprodukte zur Herstellung von Polyurethankunststoffen zu verwenden.

Zur kontinuierlichen Durchführung des erfindungsgemäßen Verfahrens sind zylindrische Reaktoren mit Zwangsförderung besonders geeignet, insbesondere dann, wenn nur geringe Überschußmengen an niedermolekularen Glykolen, höhermolekulare OH-Gruppen enthaltende Verbindungen oder weniger fein gemahlene denaturierte TDI-Rückstände eingesetzt werden sollen. Von Vorteil sind vor allem selbstreinigende Schneckenreaktoren, wie sie beispielsweise in »Schneckenmaschinen in der Verfahrenstechnik« von H. Hermann, Springer-Verlag, Berlin/Heidelberg/New York, 1972, Seiten 161 – 170, beschrieben werden. Bevorzugt sind mehrwellige, insbesondere zweiwellige Schneckenmaschinen mit gleichsinnig rotierenden, kämmenden und (bis auf ein geringes Spiel) abschabenden Schneckenwellenpaaren, die gegebenenfalls mit einer Destillationsvorrichtung zur Entfernung der Restfeuchtigkeit und gegebenenfalls des überschüssigen Glykols ausgestattet sind. Solche Schneckenmaschinen werden z. B. in DE-OS 2 925 944, DE-OS 2 302 564 und 2 423 764 (US-PS 3 963 679) sowie der dort zitierten Literatur, in DE-PS 813 154, 862 668 und 940 109 sowie in US-PS 3 233 025 und 3 642 964 beschrieben.

Ein Vorteil dieser Schneckenmaschinen ist deren ständige Selbstreinigung und Zwangsförderung bei schmalem Verweilzeitspektrum. Weiterhin bewirkt dieses Schneckensystem eine intensive Zwangskonvektion, welche neben intensiver Mischwirkung auch ausgezeichnete Wärmeübergangsbedingungen an der Gehäuseinnenwand zur Folge hat, ein Umstand, der für die (im erfindungsgemäßen Verfahren wichtige) Temperaturführung von großer Bedeutung ist.

Je nach Menge des beim erfindungsgemäßen Verfahren eingesetzten Alkohols erhält man Verfahrensprodukte, die bei Raumtemperatur flüssig oder fest sind. Überraschenderweise zeigen die erwähnten Schneckenmaschinen, wenn im erfindungsgemäßen Verfahren ein festes Endprodukt entsteht, eine unerwartet gute Grobzerkleinerungswirkung, was vorteilhafterweise dazu führt, daß die Reaktionsprodukte in Form eines pulvrigen bis körnigen, gut rieselnden Schüttgutes ausgestoßen werden. Die Schneckenmaschinen erweisen sich somit nicht nur für die Hydroxyalkylurethanbildung aus den TDI-Rückstandsschlacken als geeigneter Reaktor mit genau einstellbaren, definierten und reproduzierbaren Reaktionsbedingungen bei sehr kurzen Reaktionszeiten und praktisch quantitativem und sehr schonendem Abbau der Vernetzungsstellen, sondern auch als besonders betriebssicheres Gerät für eine im gleichen Arbeitsgang erreichbare Zerkleinerung des Verfahrensproduktes.

Bei Verwendung eines größeren Überschusses an Glykolen mit einem Siedepunkt unter 250° C im erfindungsgemäßen Verfahren ist es, falls gewünscht, möglich, durch Vakuumdestillation, bevorzugt in einer mehrwelligen Ausdampfschneckenmaschine, das nicht umgesetzte Glykol teilweise oder ganz zu entfernen, so daß im wesentlichen von Alkoholen freie Hydroxyalkyl- und Urethangruppen enthaltende Linearisierungsprodukte zurückbleiben, die in vielen Fällen bei 150 – 180° C als hochviskose Schmelzen ausgetragen werden können. Die Schmelzen lösen sich in Dimethylformamid und enthalten, wie gelchromatographische Untersuchungen mit Vergleichssubstanzen zeigen, einen bedeutenden Anteil an Verbindungen, wie sie durch Polyaddition von monomeren Toluylendiisocyanaten mit einem großen Überschuß der Glykole gebildet werden. Darüber hinaus sind noch höhermolekulare Harnstoff- und Carbodiimidverbindungen, allerdings in stark verminderter Menge, nachweisbar und geringe Mengen aromatischer Di- oder Monoamine, die mit den bei der Phosgenierung eingesetzten Aminen identisch sind oder Derivate davon.

Die von überschüssigen Alkoholen weitgehend befreiten Verfahrensprodukte können zu sehr feinteiligen Pulvern mit einem Schmelzpunkt zwischen ca. 150 und 180°C zerkleinert werden. Sie können z. B. in gelöster oder suspendierter Form als gegenüber Isocyanaten reaktionsfähige Kettenverlängerungsmittel bei der Herstellung von Polyurethankunststoffen verwendet werden.

Das erfindungsgemäße Verfahren kann, wie schon erwähnt, in Reaktionsschneckenmaschinen mit bedeutend geringeren Überschußmengen an Alkoholgruppen enthaltenden Verbindungen und ferner mit weniger feinen Korngrößen der denaturierten TDI-Rückstandsschlacken durchgeführt werden, da wegen der Zwangsförderung in der Schnecke problemlos verschiedene pulver- bzw. pastenartige und auch flüssige Zustände kontinuierlich ohne Verkleben oder Verklumpen durchlaufen werden. In DE-PS 813 154 und DE-PS 940 109 werden für Schneckenmaschinen besonders geeignete Mischelemente beschrieben, welche eine zusätzliche Zerkleinerung des zunächst körnigen TDI-Rückstandes und intensivere Einmischung der OH-Verbindungen unter Zwangsförderung bewirken.

Im Falle der Verwendung von sogenannten Ausdampfschneckenmaschinen ist es besonders vorteilhaft, die OH-Verbindungen mit den vom Denaturierungsprozeß noch feuchten TDI-Rückstandsschlacken unter gleichzeitiger Erwärmung in der Schneckenmaschine innig zu vermischen. Es hat sich gezeigt, daß in die noch mit Wasser benetzten TDI-Rückstandsschlacken, welche wegen der bei der Wasserdenaturierung auftretenden Kohlendioxidentwicklung mit Poren durchsetzt sind, die hydrophilen OH-Verbindungen, vor allem bei erhöhten Temperaturen, besonders intensiv eindringen. Die Restfeuchtigkeit, die bis 25 Gew.-%, bezogen auf die eingesetzte Schlackenmenge, betragen kann, wird durch Steigerung der Schneckentemperatur auf etwa 130 – 160°C über einen Destillationsaufsatz schnell entfernt und die Alkoholysereaktion gleichzeitig unter allmählicher Verflüssigung des Reaktionsgutes gestartet. Um einen weitgehend quantitativen, aber schonenden Abbau der Vernetzungsstellen durch die erfindungsgemäßen Linearisierungsreaktionen zu ermöglichen, steigert man die Produkttemperatur etwa in der Mitte der Schneckenmaschine bis auf ca. 200 – 210°C und kühlt am Ende der Schnecke wenigstens auf 170°C, bevorzugt unter 120°C, wieder ab. Die Linearisierungsprodukte können (je nach Art und Menge der eingesetzten, alkoholische Gruppen enthaltenden Verbindungen, der Verweilzeit von vorzugsweise etwa 3 – 15 Minuten und des Temperaturprofils) als Lösungen, Schmelzen oder feste, pulverförmige Produkte isoliert werden.

Wenn die verwendete Reaktionsschnecke ausreichende Länge aufweist oder zwei Schneckenmaschinen hintereinander verbunden sind, können nach der erfindungsgemäßen Linearisierungsreaktion weitere Umsetzungen, insbesondere Polyisocyanat-Polyadditionsreaktionen, gegebenenfalls unter zusätzlicher Mitverwendung von weiteren mit Isocyanaten reagierenden nieder- und/oder höhermolekularen H-aciden Verbindungen in den Reaktionsablauf integriert werden. Dabei erhält man direkt Polyurethankunststoffe, in denen die aus den denaturierten TDI-Rückständen und niedermolekularen OH-Verbindungen »in-situ« erhaltenen Produkte chemisch eingebaut sind. Selbstverständlich sind aber diese Folgereaktionen nach Isolierung der erfindungsgemäß erhaltenen Produkte wegen deren ausgezeichneter Lagerstabilität auch zu einem beliebigen anderen Zeitpunkt und an einem beliebigen Ort möglich. Die Herstellung von homogenen oder zelligen Polyurethankunststoffen erfolgt nach den an sich bekannten Verfahren, bei denen die mit Hydroxyalkyl- und Urethangruppen modifizierten linearisierten TDI-Rückstände als neuartige Rohstoffe in der Funktion von Kettenverlängerungsmitteln eingesetzt werden.

Gegenstand der Erfindung ist somit auch ein Verfahren zur Herstellung von gegebenenfalls zellförmigen, flammwidrigen Polyurethankunststoffen durch Umsetzung von

A) Polyisocyanaten mit
B) gegenüber Isocyanaten reaktive Gruppen aufweisenden Verbindungen, gegenenfalls in Gegenwart von
C) Aktivatoren, Treibmitteln, Füllstoffen und weiteren an sich bekannten Zusatzstoffen,

welches dadurch gekennzeichnet ist, daß als Komponente B), gegebenenfalls nur anteilweise, die erfindungsgemäß aufgearbeiteten, denaturierten TDI-Rückstände und/oder deren Veresterungs- und/oder Alkoxylierungsprodukte eingesetzt werden.

Für die Herstellung der Polyurethankunststoffe geeignete Polyisocyanate, Zusatzstoffe sowie gegebenenfalls mitzuverwendende zusätzliche Verbindungen mit gegenüber Isocyanaten reaktiven Gruppen (insbesondere hoch- und niedermolekulare Polyole und Polyamine) sind dem Fachmann an sich bekannt und — ebenso wie geeignete Herstellungsverfahren — z. B. DE-OS 2 302 564, DE-OS 2 423 764 (US-PS 3 963 679) sowie DE-OS 2 550 796, 2 550 797 und 2 550 833 (US-PS 4 093 569 und 4 147 680) zu entnehmen.

Wie schon erwähnt, können die Hydroxyalkylgruppen der erfindungsgemäßen Linearisierungsprodukte auch in entsprechende höhermolekulare Zwischenprodukte überführt werden, beispielsweise in Polyurethangruppen enthaltende, gesättigte oder ungesättigte Polyester durch Veresterung mit Dicarbonsäuren, ferner in Polyether durch Alkoxylierungsreaktionen, oder auch in NCO-Vorpolymere durch Umsetzung mit einer überschüssigen Menge an Polyisocyanat. Aus allen diesen Zwischenprodukten können wieder Kunststoffe nach an sich bekannten Polyadditions-, Polykondensations- und Polymerisationsverfahren hergestellt werden.

Neben den schon erwähnten Polyisocyanat-Polyadditionsreaktionen kommen in diesem Zusammenhang beliebige Reaktionen in Frage, an welchen die erfindungsgemäß erhaltenen Linearisierungsprodukte über ihre reaktiven Gruppen, d. h., insbesondere Hydroxyl- und Urethangruppen bzw. auch olefinisch ungesättigte Gruppen (falls z. B. bei der Aufarbeitung ungesättigte Alkohole eingesetzt oder die Aufarbeitungsprodukte mit ungesättigten Carbonsäuren umgesetzt wurden) teilnehmen können. Beispiele hierfür sind u. a. Polykondensationsreaktionen von Carbonylverbindungen mit Aminoplast- und/oder Phenoplastmonomeren, Epoxidharze, Cyanatharze und Copolymerisationsreaktionen mit Vinylmonomeren.

Die auf diese Weise erhaltenen homogenen oder zelligen Kunststoffe, insbesondere Polyurethanschaumstoffe, Beschichtungen, Lacke, Überzüge, Klebstoffe, Fugendichtungsmassen und Verleimungsmittel, zeichnen sich durch verbesserte physikalische Eigenschaften, insbesondere erhöhte Zugfestigkeit und verminderte Brennbarkeit aus. In Polyurethanrezepturen, in welchen sehr große Mengen an Isocyanaten vorgesehen sind (was häufig zu schwer zu regulierenden und die Eigenschaften der Polyurethankunststoffe schädigenden extrem hohen Reaktionstemperaturen führt), können bei Mitverwendung der erfindungsgemäßen Produkte relativ geringere Isocyanatmengen eingesetzt werden, so daß die Polyaddition bei schonenderen Reaktionstemperaturen abläuft. Häufig können die Eigenschaften der erfindungsgemäß hergestellten Kunststoffe durch Mitverwendung organischer und/oder anorganischer Füllstoffe noch zusätzlich variiert werden.

Von besonderem Interesse sind in diesem Zusammenhang lignocellulosehaltige Materialien (insbesondere Holzspäne und -abfälle), wie sie z. B. in DE-OS 2 325 926 (US-PS 3 870 665) genannt werden. So ist es insbesondere möglich, die erfindungsgemäß linearisierten, denaturierten TDI-Rückstandsschlacken bei der Herstellung von Platten oder Formteilen durch Heißverpressen von mit einem geeigneten Bindemittel (z. B. Polyisocyanat und/oder Kondensationsprodukte des Formaldehyds mit Harnstoff, Melamin und/oder Phenol) vermischten lignocellulosehaltigen Fasern, Spänen oder Lagen in einer Menge bis zu ca. 60 Gew.-%, vorzugsweise 5–40 Gew.-%, bezogen auf Gesamtgewicht des Formkörpers, mitzuverwenden. Verfahren zur Herstellung solcher Werkstoffe werden z. B. in der schon genannten US-PS 3 870 665 sowie in DE-OS 1 669 759 und DE-AS 1 653 169 und der dort zitierten Literatur beschrieben.

Die folgenden Beispiele erläutern das erfindungsgemäße Verfahren. Wenn nicht anders vermerkt, sind Mengenangaben als Gewichtsteile bzw. Gewichtsprozente zu verstehen.

In den Beispielen wurden Toluylendiisocyanat (TDI)-Rückstandsschlacken verwendet, die bei der Vakuumdestillation von monomerem 2,4-/2,6-TDI (Isomerengemisch 80 : 20) aus dem Phosgenierungsprodukt von TDA als praktisch monomerenfreie Sumpfphase angefallen waren und als teerartige, 150–180°C heiße, zähe Masse (TDI-Teer) mit einem Gehalt von 23–28 Gew.-% an freien Isocyanatgruppen sofort in einem großen Überschuß an Wasser unter lebhafter Kohlendioxidentwicklung und Bildung von Polyharnstoff- und Biuretgruppen denaturiert wurden. Außerdem wiesen die feuchten Rückstandsschlacken keine oder noch 1–10 Gew.-% an inkludierten freien Isocyanatgruppen auf, ferner größere Mengen an Uretdion-, Isocyanurat-, Carbodiimid- und Uretoniminogruppen und geringe Mengen an Methylbenzimidazolonen und deren Biuretisierungsderivate. Diese hochvernetzten TDI-Rückstandsschlacken enthielten keine monomeren Toluylendiisocyanate und waren in allen gebräuchlichen organischen Lösungsmitteln, beispielsweise Methylenchlorid, Cyclohexan, Cyclohexanon, Toluol, Xylol oder Dichlorbenzol, auch bei Siedetemperatur und sehr fein zerkleinert, unlöslich. In siedendem Dimethylformamid wurden sie nur angequollen. Bei Temperaturen über 280°C erfolgte eine allmähliche Zersetzung ohne Schmelzen. Die grobkörnigen TDI-Rückstandsschlacken wurden mit einer Restfeuchte unter 15 Gew.-% auf einer Hammermühle unter 1–3 mm vorzerkleinert und mit einer Luftstrommühle auf eine mittlere Teilchengröße unter 200 μm oder nach weitgehender Entfernung der Restfeuchte mit Hilfe einer Luftstrahlmühle unter 20 μm gemahlen. Die feinteiligen, denaturierten Rückstandsschlacken hatten einen ausgeprägten duromeren Charakter, d. h., sie konnten auch unter Druckanwendung bei Temperaturen von 250°C nicht homogen verpreßt werden. Die so erhaltenen Preßlinge ließen sich vielmehr mühelos zwischen den Fingern zerreiben.

### Beispiel 1

In einer Rührapparatur werden in 100 Teile Monoethylenglykol zunächst bei Raumtemperatur 60 Teile eines wie oben beschrieben erhaltenen denaturierten TDI-Rückstandes (Restfeuchte: unter 2%; Teilchengröße: unter 200 μm; Gehalt an freien NCO-Gruppen: 8,6%) eingerührt und die Temperatur auf 100°C erhöht. In die so erhaltene heiße Suspension werden weitere 40 Teile des gleichen TDI-Rückstandes eingerührt. Unter schwachem Stickstoffstrom wird danach die Temperatur des Reaktionsgemisches zügig auf 170°C erhöht.

Innerhalb von 10 Minuten geht die suspendierte, feinteilige Rückstandsschlacke in eine rotbraun gefärbte, hochkonzentrierte glykolische Lösung über, die sofort abgekühlt wird. Bei 25°C hat die so erhaltene lagerstabile Lösung des linearisierten TDI-Rückstandes eine Viskosität von 105 000 mPa · s. Wie eine gaschromatographische Untersuchung zeigt, enthält die Lösung noch 45,5 Teile des ursprünglich eingesetzten Glykols, d. h., es sind 54,5 Teile Glykol für die Linearisierungsreaktion von 100 Teilen des denaturierten Destillationsrückstandes verbraucht worden. Durch Verdünnen der ca. 77%igen Lösung mit 11 (40) Teilen Ethylenglykol wird die Viskosität auf 21 000 (450) mPa·s erniedrigt.

Im IR-Spektrum lassen sich neben der Glykolkomponente größere Mengen an Urethangruppen erkennen, daneben in untergeordneter Menge Carbodiimid- und Harnstoffgruppen, jedoch keine Biuret- oder Isocyanuratgruppen. Durch gelchromatographische Analyse lassen sich (wie durch Vergleichschromatogramme gezeigt werden konnte) von Toluylendiisocyanaten ableitbare nieder- und höhermolekulare Polyhydroxyethylurethane identifizieren, ferner geringere Mengen an aromatischen Aminen, die den bei der Phosgenierung eingesetzten Toluylendiaminen entsprechen.

Die beim erfindungsgemäßen Verfahren erhaltene 77%ige glykolische Lösung kann bei Raumtemperatur ohne Fällung mit bis zu 40% Wasser verdünnt werden und ist in Methanol, Tetrahydrofuran und Dimethylformamid löslich.

### Beispiel 2

Aus der nach Beispiel 1 erhaltenen 77%igen Lösung des Linearisierungsproduktes wird das freie Monoethylenglykol destillativ unter reduziertem Druck bei 100 bis 130°C entfernt. Es verbleibt ein bei 150 bis 170°C quantitativ aufschmelzbarer Rückstand, der nach dem Abkühlen zu einem sehr feinteiligen Pulver zerkleinert und direkt oder in dispergierter Form zur Herstellung von Kunststoffen, insbesondere nach dem Polyisocyanat-Polyadditionsverfahren eingesetzt werden kann.

### Beispiel 3

In 100 Teile der nach Beispiel 1 hergestellten 77%igen Lösung des Linearisierungsproduktes werden 10 Teile Wasser und 50 Teile Aceton eingerührt. Aus dieser Lösung wird das Linearisierungsprodukt durch Einrühren der Lösung in 500 Teile Wasser ausgefällt. Es entsteht ein feinteiliger Niederschlag, der abfiltriert, mit Wasser gewaschen und getrocknet wird. Das so erhaltene Pulver hat einen Schmelzpunkt von 160 bis 170°C und ist analytisch weitgehend mit dem nach Beispiel 2 erhaltenen Rückstand identisch.

### Beispiel 4

100 Teile der nach Beispiel 1 erhaltenen 77%igen Lösung des linearisierten TDI-Rückstandes in Ethylenglykol werden mit 40 Teilen Adipinsäure in einem schwachen Kohlendioxidstrom bei 180 bis 195°C in einer Rührapparatur unter Abspaltung von Wasser verestert. Man erhält einen Urethangruppen aufweisenden Polyester mit einem Erweichungspunkt von ca. 50°C, der direkt als Rohstoff für die Herstellung von Polyurethankunststoffen eingesetzt werden kann.

### Beispiel 5

100 Teile des nach Beispiel 2 oder 3 erhaltenen pulverförmigen Produktes werden bei Raumtemperatur mit 15 Teilen eines technischen rohen Diphenyimethandiisocyanats (NCO-Gehalt: 30%) vermischt und bei 170 bis 180°C/50 bar zu 2 bis 4 mm dicken Platten verpreßt. Diese Platten können als Wandvertäfelung oder Bodenbelag verwendet werden und weisen gegenüber konventionellen Polyurethanplatten einen deutlich verbesserten Brandschutz auf. Die Kugeldruckhärte nach 30 Sekunden beträgt 205 MPa, der Elastizitätsmodul 3430 MPa.

### Beispiel 6

100 Teile Monoethylenglykol und 133 Teile eines denaturierten TDI-Destillationsrückstandes mit einer Teilchengröße unter 1,2 mm, einem Wassergehalt von 25% und einem NCO-Gehalt von 1,2% werden wie in Beispiel 1 beschrieben in einer Rührapparatur, die zusätzlich mit einer Destillationsbrücke ausgestattet ist, zunächst auf 100 bis 120°C erhitzt, um das Wasser destillativ zu entfernen. Danach wird in die Suspension ein schwacher Stickstoffstrom eingeleitet und die Temperatur schnell auf 160°C und nach 20 Minuten auf 180°C erhöht. Nachdem der TDI-Rückstand gelöst ist, kühlt man auf 120°C ab und filtriert die Lösung durch ein 100-µm-Sieb.

Die erkaltete Lösung hat bei 25°C eine Viskosität von 102 000 mPa·s und entspricht in ihrer chemischen Zusammensetzung praktisch dem nach Beispiel 1 erhaltenen Produkt.

### Beispiel 7

500 Teile der nach Beispiel 1 oder 5 erhaltenen Lösung des linearisierten TDI-Destillationsrückstandes in überschüssigem Ethylenglykol,

| 100 Teile | Phenol, |
| 106 Teile | einer 30%igen wäßrigen Formaldehydlösung und |
| 12 Teile | 85%ige wäßrige Polyphosphorsäure |

werden in einer Rührapparatur erhitzt und das Wasser vollständig abdestilliert. Gegen Ende der Kondensationsreaktion wird die Temperatur des Reaktionsgemisches auf 140°C gesteigert. Das Produkt geht beim Abkühlen bei 40°C in eine sehr zähe Masse über, die als Klebstoff oder Bindemittel, gegebenenfalls unter Zusatz von Isocyanatgruppen aufweisenden Verbindungen, verwendet werden kann. Die Masse eignet sich selbstverständlich auch als Hydroxylgruppen aufweisende Ausgangskomponente für die Herstellung von homogenen oder zelligen Polyurethankunststoffen.

### Beispiel 8

### Herstellung einer Holzspanplatte

Späne aus Nadelholz (Länge 0,5 bis 2,5 cm; Wassergehalt: 8 bis 10%) werden mit dem nach Beispiel 7 erhaltenen, auf 80 bis 100°C erhitzten Polykondensat mechanisch intensiv vermischt (Mischungsverhältnis: 90 : 10). Die lagerfähige Mischung wird auf Stahlbleche aufgestreut und bei 180°C unter Druck verpreßt (15 Sekunden pro Millimeter Plattendicke).

Eine so hergestellte 10 mm dicke Spanplatte mit einer Rohdichte von 0,8 g/cm$^3$ ist gegen Schlagbruch äußerst widerstandsfähig und besitzt eine hohe Härte und Oberflächenglanz. Die mechanische Bearbeitbarkeit ist gegenüber konventionellen Spanplatten deutlich verbessert und die Lackierbarkeit vereinfacht.

Extrem gegen Feuchtigkeit und sogar gegen Lagerung in Wasser beständige Spanplatten erhält man, wenn man zusätzlich 5%, bezogen auf gesamtes Material, an rohem Diphenylmethandiisocyanat (NCO-Gehalt: 30%) als weiteres Bindemittel mitverwendet.

### Beispiel 9

100 Teile Diethylenglykol und 100 Teile des in Beispiel 1 verwendeten denaturierten TDI-Rückstandes werden, wie in Beispiel 1 beschrieben, zur Reaktion gebracht. Man erhält eine rotbraun gefärbte Lösung des linearisierten Rückstandes in überschüssigem Diethylenglykol, die bei 70(40)°C eine Viskosität von 1800 (10 500) mPa·s aufweist.

Gaschromatographisch können aus der so erhaltenen Lösung 76 Gew.-Teile Diethylenglykol isoliert werden, d. h., daß 24% des Diethylenglykols für die erfindungsgemäße Linearisierungsreaktion verbraucht worden sind. Destilliert man unter reduziertem Druck schonend das überschüssige Diethylenglykol ab, so erhält man einen fein pulverisierbaren, Hydroxyalkyl- und Urethangruppen enthaltenden Rückstand, der — ebenso wie das in Diethylenglykol gelöste, flüssige Produkt — als Kettenverlängerungsmittel für die Herstellung von Polyurethankunststoffen verwendet werden kann.

### Beispiel 10

### Herstellung eines Polyurethan-Hartschaumstoffes

In eine frisch hergestellte Mischung aus

| | |
|---|---|
| 100 Teilen | eines durch Propoxylierung von Saccharose erhaltenen Polyethers mit einer OH-Zahl von 380 und einem Wassergehalt von 1,8 Gew.-%, |
| 50 Teilen | der nach Beispiel 6 erhaltenen Lösung von linearisiertem TDI-Destillationsrückstand in Ethylenglykol, |
| 1,3 Teilen | N,N-Dimethylcyclohexylamin und |
| 35 Teilen | Monofluortrichlormethan |

werden innerhalb von 12 Sekunden bei Raumtemperatur

| | |
|---|---|
| 127 Teile | eines flüssigen technischen Diphenylmethandiisocyanats (NCO-Gehalt: 30,4%) |

eingerührt und das Reaktionsgemisch in eine offene Form gegossen. Nach 97 Sekunden ist der Schaumstoff abgebunden. Sein Raumgewicht beträgt 27,8 kg/cm$^3$. Der so erhaltene Hartschaumstoff zeichnet sich durch eine besonders hohe Zähigkeit aus.

### Beispiel 11

| | |
|---|---|
| 85 Teile | Polyurethan-Weichschaumabfälle, die auf eine Teilchengröße unter 3 mm zerkleinert wurden, |
| 10 Teile | der nach Beispiel 9 erhaltenen Lösung des Linearisierungsproduktes und |
| 5 Teile | rohes Diphenylmethandiisocyanat (NCO-Gehalt: 30,4%) |

werden bei 100°C mechanisch intensiv vermischt, wobei mehr als 70% der freien NCO-Gruppen des Diphenylmethandiisocyanats mit der Lösung des linearisierten TDI-Destillationsrückstandes abreagieren. Die erhaltene rieselfähige Mischung kann zu einem beliebigen Zeitpunkt — je nach angestrebtem Raumgewicht — bei 160 bis 180°C und 30 bis 50 bar zu einem zelligen oder homogenen Polyurethankunststoff verpreßt werden. So erhaltene homogene, gummielastische Preßplatten weisen gegenüber einem Vergleichsprodukt, welches aus 85 Teilen der Weichschaumabfälle und 5 Teilen des rohen Diphenylmethandiisocyanats (also ohne Mitverwendung der erfindungsgemäß hergestellten Linearisierungsprodukte) hergestellt worden ist, eine um 55% höhere Reißfestigkeit und eine auf das 2$^1$/$_2$fache erhöhte Reißdehnung auf.

### Beispiel 12

100 Teile der nach Beispiel 9 erhaltenen Lösung des Linearisierungsproduktes in Diethylenglykol werden mit 40 Teilen Adipinsäure, wie in Beispiel 4 beschrieben, verestert. Der Polyester hat bei 70 (40)°C eine Viskosität von 1800 (10 500) mPa·s.

### Beispiel 13

120 Teile 1.4-Butandiol und 80 Teile des denaturierten TDI-Rückstands von Beispiel 1 werden, wie in den Beispielen 1 und 6 beschrieben, zur Reaktion gebracht. Man erhält eine rotbraun gefärbte Lösung eines Hydroxybutylurethangruppen enthaltenden Linearisierungsprodukts in überschüssigem Butandiol. Die Lösung weist bei 100 (50)°C eine Viskosität von 1200 (10 600) mPa · s auf.

### Beispiel 14

Analog zur Verfahrensweise von Beispiel 1 werden 100 Teile des denaturierten TDI-Rückstands von Beispiel 1, welcher auf eine Teilchengröße unter 20 µm zerkleinert wurde, mit 100 Teilen eines Destillationsrückstands aus der Ethylenglykolherstellung (OH-Zahl: 514; Hauptbestandteile: Tetra-, Penta- und Hexaethylenglykol, pH = 9 − 11) in einer Rührapparatur umgesetzt. Das homogene Linearisierungsprodukt hat bei 100 (75; 50)°C eine Viskosität von 800 (2100; 8900) mPa · s.

Wiederholt man den Versuch mit der gröberteiligen TDI-Rückstandsschlacke von Beispiel 6 (Teilchengröße ≦ 1,2 mm) so bleiben auch nach 2stündigem Erhitzen des Reaktionsgemisches auf 180 bis 210°C ca. 25 bis 40% des eingesetzten Rückstands ungelöst. Führt man die Linearisierungsreaktion nicht diskontinuierlich in einer Kesselrührapparatur sondern kontinuierlich in einer Ausdampfschneckenmaschine aus, so läßt sich auch die gröberteilige Rückstandsschlacke (die noch einen Wassergehalt von 25% aufweist) mit dem oben definierten Ethylenglykol-Destillationsrückstand problemfrei linearisieren.

### Beispiel 15

100 Teile Glycerin und 100 Teile einer denaturierten TDI-Rückstandsschlacke mit einer Teilchengröße unter 100 µm (NCO-Gehalt: Null; Restfeuchte: 3,5%) werden analog zur Verfahrensweise von Beispiel 1 bei 180 bis 200°C zur Reaktion gebracht. Man erhält eine rotbraune Lösung, welche bei 70 (60)°C eine Viskosität von 10 000 (60 000) mPa · s aufweist.

### Beispiel 16

100 Gew.-Teile der nach Beispiel 1 erhaltenen 50%igen Lösung des TDI-Rückstandes in Ethylenglykol werden mit 30 Gew.-Teilen einer 33%igen wäßrigen Lösung von Natriumhydroxid in einem Autoklaven 45 Minuten bei 170 − 210°C hydrolysiert.

Nach dem Entspannen und Erkalten der rotbraunen Reaktionslösung erfolgt die Abtrennung der Isomeren 2,4'- und 2,6'-Toluylendiamine durch Extraktion mit Dichlormethan. Nach dem Trocknen der organischen Phase isoliert man die Diamine durch Destillation mit einem Siedepunkt zwischen 168 und 180° bei 25 mbar in reiner Form, so daß sie für eine weitere Phosgenierung und Produktion der entsprechenden Diisocyanate wieder eingesetzt werden können.

**Patentansprüche**

1. Verfahren zur Aufarbeitung von im wesentlichen monomerenfreien, vernetzten, in inerten organischen Lösungsmitteln unlöslichen, nicht unzersetzt schmelzbaren Destillationsrückständen, wie sie bei der destillativen Entfernung von monomeren Toluylendiisocyanaten aus dem rohen Phosgenierungsprodukt von Toluylendiaminen nach Denaturierung der Sumpfphase mit Wasser in Schlackenform anfallen, dadurch gekennzeichnet, daß man die Rückstansschlakke mit einem zweiwertigen und/oder dreiwertigen sowie gegebenenfalls einwertigen Alkohol vom Molekulargewicht 62 bis 600, wobei eine solche Menge an Alkohol eingesetzt wird, das mindestens 2 Gew.-% an alkoholischen Hydroxylgruppen, bezogen auf Gemisch aus Rückstandsschlacke und Alkohol, vorliegen, bei einer Temperatur von 130°C bis 300°C umsetzt, bis das Reaktionsgemisch homogen wird und danach die Reaktion durch Kühlen abbricht.

2. Verfahren nach Anspruch 1, dadurch gekennzeichnet, daß man nach Beendigung der Reaktion den nicht umgesetzten, überschüssigen Alkohol entfernt.

3. Verfahren nach Anspruch 1 und 2, dadurch gekennzeichnet, daß die Rückstandsschlacke eine Teilchengröße von weniger als 3 mm, vorzugsweise unter 1 mm aufweist.

4. Verfahren nach Anspruch 1 bis 3, dadurch gekennzeichnet, daß ein zweiwertiger und/oder dreiwertiger Alkohol mit einem Molekulargewicht von 62 bis 200 eingesetzt wird.

5. Verfahren nach Anspruch 1 bis 4, dadurch gekennzeichnet, daß als Alkohol Mono-, Di- oder Polyethylenglykol eingesetzt wird.

6. Verfahren nach Anspruch 1 bis 5, dadurch gekennzeichnet, daß eine solche Menge an Alkohol eingesetzt wird, daß im Reaktionsgemisch mindestens 8 Gew.-% an alkoholischen Hydroxylgruppen, bezogen auf Gemisch aus Rückstandsschlacke und Alkohol, vorliegen.

7. Verfahren nach Anspruch 1 bis 6, dadurch gekennzeichnet, daß die Reaktionstemperatur 140 bis 220° C beträgt.

8. Ausführungsform des Verfahrens nach Anspruch 1 bis 7, dadurch gekennzeichnet, daß man die linearisierten Produkte anschließend in an sich bekannter Weise zu Toluylendiaminen hydrolysiert.

9. Verwendung der nach Anspruch 1 bis 8 erhaltenen Produkte als Reaktivkomponente bei der Herstellung von Kunststoffen durch Polyadditions-, Polykondensations- oder Polymerisationsverfahren, gegebenenfalls unter Mitverwendung von Lignocellulosehaltigen Materialien als Füllstoff.

10. Verwendung der nach Anspruch 1 bis 8 erhaltenen Produkte oder deren Veresterungs- und/oder Alkoxylierungsprodukte als Reaktivkomponente bei der Herstellung von gegebenenfalls zellförmigen, flammwidrigen Polyurethankunststoffen zur Umsetzung mit Polyisocyanaten und gegebenenfalls weiteren, gegenüber Isocyanaten reaktive Gruppen aufweisenden Verbindungen, gegebenenfalls in Gegenwart von Aktivatoren, Treibmitteln, Füllstoffen und weiteren an sich bekannten Zusatzstoffen und gegebenenfalls im Gemisch mit Lignocellulose haltigen Materialien.

## Claims

1. Process for working up substantially monomer-free, cross-linked distillation residues which are insoluble in inert organic solvents and cannot melt without decomposition, such as are obtained in the form of slag after denaturation of the sump phase with water when monomeric tolylene diisocyanates are removed by distillation from the crude phosgenation product of tolylene diamines, characterised in that the residue slags are reacted at a temperature of 130° C to 300° C with a dihydric and/or trihydric alcohol and optionally also a monohydric alcohol having a molecular weight of 62 to 600, using a quantity of alcohol corresponding to at least 2% by weight of alcoholic hydroxyl groups, based on the mixture of residue slags and alcohol, the reaction being continued until the reaction mixture is homogeneous, and the reaction is then stopped by cooling.

2. Process according to Claim 1, characterised in that the unreacted excess alcohol is removed after termination of the reaction.

3. Process according to Claim 1 and 2, characterised in that the residue slag has a particle size of less than 3 mm, preferably less than 1 mm.

4. Process according to Claims 1 to 3, characterised in that a dihydric and/or trihydric alcohol having a molecular weight of 62 to 200 is used.

5. Process according to Claims 1 to 4, characterised in that the alcohol used is mono-, di- or polyethylene glycol.

6. Process according to Claims 1 to 5, characterised in that the quantity of alcohol used in such that the reaction mixture contains at least 8% by weight of alcoholic hydroxyl groups, based on the mixture of residue slag and alcohol.

7. Process according to Claims 1 to 6, characterised in that the reaction temperature is 140 to 220° C.

8. An embodiment of the process according to Claims 1 to 7, characterised in that the linearised products are subsequently hydrolyzed to give tolylene diamines in a manner known per se.

9. Use of the products obtained according to Claims 1 to 8 as reactive components in the preparation of synthetic resins by polyaddition, polycondensation of polymerisation processes, optionally with the addition of materials containing lignocellulose as fillers.

10. Use of the products obtained according to Claims 1 to 8 or esterification and/or alkoxylation products thereof as reactive components in the preparation of optionally cellular flameresistant polyurethanes for the reaction with polyisocyanates and optionally other compounds containing isocyanate reactive groups, optionally in the presence of activators, blowing agents, fillers and other known additives, and optionally in admixture with materials containing lignocellulose.

## Revendications

1. Procédé de traitement de résidus de distillation essentiellement exempts de monomères, réticulés, insolubles dans les solvants organiques inertes et fusibles avec décomposition, tels que ceux obtenus sous forme de laitiers lors de l'élimination, par distillation, de toluylène-diisocyanates monomères hors du produit de phosgénation brut de toluylène-diamines après dénaturation de la phase pâteuse avec l'eau, caractérsé en ce qu'on fait réagir le laitier résiduaire avec un alcool bivalent et/ou un alcool trivalent, ainsi qu'éventuellement un alcool monovalent d'un poids moléculaire de 62–600 en utilisant une quantité d'alcool calculée de telle sorte qu'il y ait au moins 2% en poids de groupes hydroxy alcooliques, calculé sur le mélange du laitier résiduaire et de l'alcool, à une température de 130 à 300° C jusqu'à ce que le mélange réactionnel soit homogène, après quoi on interrompt la réaction par refroidissement.

2. Procédé suivant la revendication 1, caractérisé en ce que, au terme de la réaction, on élimine l'alcool en excès n'ayant par réagi.

3. Procédé suivant les revendications 1 et 2, caractérisé en ce que le laitier résiduaire est en particules d'une granularité inférieure à 3 mm, de préférence, inférieure à 1 mm.

4. Procédé suivant les revendications 1 à 3, caractérisé en ce qu'on utilise un alcool bivalent et/ou trivalent d'un poids moléculaire de 62 à 200.

5. Procédé suivant les revendications 1 à 4, caractérisé en ce que, comme alcool, on utilise le monoéthylène-glycol, le diéthylene-glycol ou le poly-éthylène-glycol.

6. Procédé suivant les revendications 1 à 5, caractérisé en ce qu'on utilise un alcool en une quantité calculée de telle sorte que le mélange réactionnel contienne au moins 8% en poids de groupes hydroxy alcooliques, calculé sur le mélange du laitier résiduaire et de l'alcool.

7. Procédé suivant les revendications 1 à 6, caractérisé en ce que la température réactionnelle est de 140 à 220° C.

8. Forme de réalisation de procédé suivant les revendications 1 à 7, caractérisé en ce qu'on hydrolyse ensuite, de façon connue en soi, les produits linéarisés en toluylène-diamines.

9. Utilisation des produits obtenus suivant les revendications 1 à 8, comme composants réactifs lors de la fabrication de matières synthétiques par des procédés de polyaddition, de polycondensation ou de polymérisation, en utilisant éventuellement conjointement des matières contenant de la lignocellulose comme charge.

10. Utilisation des produits obtenus suivant les revendications 1 à 8 ou de leurs produits d'estérification et/ou d'alcoxylation comme composants réactifs lors de la fabrication de matières synthétiques de polyuréthanes ininflammables et éventuellement cellulaires pour la réaction avec des polyisocyanates et éventuellement des composés supplémentaires comportant des groupes réactifs vis-à-vis des isocyanates, éventuellement en présence d'activateurs, d'agents moussants, de charges et d'autres additifs connus en soi, ainsi qu'éventuellement en mélange avec des matières contenant de la lignocellulose.